(19) Europäisches Patentamt
European Patent Office
Office européen des brevets

(11) **EP 4 084 027 A1**

(12) **EUROPEAN PATENT APPLICATION**
published in accordance with Art. 153(4) EPC

(43) Date of publication:
**02.11.2022 Bulletin 2022/44**

(21) Application number: **20907094.5**

(22) Date of filing: **16.11.2020**

(51) International Patent Classification (IPC):
*H01G 11/52* (2013.01)    *H01M 50/409* (2021.01)
*H01G 9/02* (2006.01)

(52) Cooperative Patent Classification (CPC):
**H01G 9/02; H01G 11/52; H01M 50/409;**
Y02E 60/10; Y02E 60/13

(86) International application number:
**PCT/JP2020/042646**

(87) International publication number:
**WO 2021/131396 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.12.2019 JP 2019234225**

(71) Applicant: **Kuraray Co., Ltd.**
**Kurashiki-shi, Okayama 710-0801 (JP)**

(72) Inventors:
• **KUSUNOKI, Toshimichi**
**Okayama-shi, Okayama 702-8601 (JP)**
• **HAYAKAWA, Tomohiro**
**Okayama-shi, Okayama 702-8601 (JP)**
• **KAWAI, Hiroyuki**
**Okayama-shi, Okayama 702-8601 (JP)**
• **ARAMAKI, Jun**
**Osaka-shi, Osaka 530-8611 (JP)**

(74) Representative: **Müller-Boré & Partner**
**Patentanwälte PartG mbB**
**Friedenheimer Brücke 21**
**80639 München (DE)**

(54) **SEPARATOR FOR ELECTROCHEMICAL ELEMENTS**

(57)    The present invention relates to a separator for electrochemical elements, the separator comprising synthetic fibers and beaten cellulose fibers, wherein the beaten cellulose fibers have a Canadian standard freeness measured in accordance with JIS P 8121 of 50 ml or more and 500 ml or less, and in a fiber diameter distribution histogram of the beaten cellulose fibers, (1) the fibers have a maximum frequency peak in a range of 50 μm or less, and (2) a ratio of the fibers having a fiber diameter of 20 μm or less is 55% or more.

Fig. 1

EP 4 084 027 A1

**Description**

TECHNICAL FIELD

The present patent application claims Paris Convention priority based on Japanese Patent Application No. 2019-234225 (filed on December 25, 2019), which is incorporated herein by reference in its entirety.
The present invention relates to a separator for electrochemical elements suitable for electrochemical elements and an electrochemical element comprising the separator.

BACKGROUND ART

Since electrochemical elements such as capacitors can be charged and discharged at a large current and have long lifetimes with little performance degradation caused by repetition of charge and discharge, in recent years, electrochemical elements have been put to practical use and studied in such applications as storage and stabilization of electric power for large products such as automobiles, digital multifunction devices, and vending machines, electric power assist, backup power supply, energy regeneration, etc. in addition to such applications as backup power for small products such as mobile phones and smartphones.
In such an electrochemical element, a separator is used to separate the positive electrode and the negative electrode. For example, Patent Document 1 discloses a separator for an electrochemical element, the separator comprising a wet nonwoven fabric containing synthetic staple fibers and solvent-spun cellulose fibers having a specific modified freeness and a specific length weighted average fiber length as essential components.

PRIOR ART DOCUMENT

PATENT DOCUMENT

Patent Document 1: JP 2012-222266 A

SUMMARY OF THE INVENTION

PROBLEMS TO BE SOLVED BY THE INVENTION

In recent years, for the purpose of further improvement of electrochemical elements in performance and size reduction and/or weight reduction of electrochemical elements, it is required to thin a separator in an electrochemical element to reduce the capacity of the separator. However, according to the study of the present inventors, it is difficult to thin a conventional separator such as that described in the document cited above without reducing the basis weight, and it has been found that when the separator is thinned, there is caused a problem that the basis weight is reduced, whereby the strength of the separator is reduced and, as a result, the strength, durability, and the like of an electrochemical element may also be reduced.
Thus, an object of the present invention is to provide a separator for electrochemical elements that can be thinned while maintaining the strength of the separator.

SOLUTIONS TO THE PROBLEMS

As a result of intensive studies to solve the above problems, the present inventors have accomplished the present invention. That is, the present invention provides the following preferred embodiments.
[1] A separator for electrochemical elements, the separator comprising synthetic fibers and beaten cellulose fibers, wherein

the beaten cellulose fibers have a Canadian standard freeness measured in accordance with JIS P 8121 of 50 ml or more and 500 ml or less, and
in a fiber diameter distribution histogram of the beaten cellulose fibers,

(1) the fibers have a maximum frequency peak in a range of 50 $\mu$m or less, and
(2) a ratio of the fibers having a fiber diameter of 20 $\mu$m or less is 55% or more.

[2] The separator for electrochemical elements according to [1], further comprising a binder.

[3] The separator for electrochemical elements according to [1] or [2], wherein in the fiber diameter distribution histogram of the beaten cellulose fibers, a ratio of the fibers having a fiber diameter of more than 30 μm is 10% or less.

[4] The separator for electrochemical elements according to any one of [1] to [3], wherein the synthetic fibers are polyvinyl alcohol-based fibers and/or polyester-based fibers.

[5] The separator for electrochemical elements according to any one of [1] to [4], wherein the beaten cellulose fibers are beaten natural cellulose fibers.

[6] The separator for electrochemical elements according to any one of [2] to [5], wherein the binder is a polyvinyl alcohol-based binder.

[7] The separator for electrochemical elements according to any one of [1] to [6], wherein a content of the synthetic fibers is 1% by mass or more and 55% by mass or less based on a total mass of the separator.

[8] The separator for electrochemical elements according to any one of [1] to [7], wherein a content of the beaten cellulose fibers is 30% by mass or more and 95% by mass or less based on a total mass of the separator.

[9] The separator for electrochemical elements according to any one of [2] to [8], wherein a content of the binder is 0.5% by mass or more and 20% by mass or less based on a total mass of the separator.

[10] The separator for electrochemical elements according to any one of [1] to [9], wherein the separator has a thickness of 10 μm or more and less than 70 μm.

[11] An electrochemical element comprising the separator for electrochemical elements according to any one of [1] to [10].

EFFECTS OF THE INVENTION

According to the present invention, it is possible to provide a separator for electrochemical elements that can be thinned while maintaining the strength of the separator.

BRIEF DESCRIPTION OF THE DRAWINGS

Fig. 1 is a fiber diameter distribution histogram of natural cellulose fibers having a freeness of 25 ml.
Fig. 2 is a fiber diameter distribution histogram of natural cellulose fibers having a freeness of 150 ml.
Fig. 3 is a fiber diameter distribution histogram of natural cellulose fibers having a freeness of 250 ml.
Fig. 4 is a fiber diameter distribution histogram of natural cellulose fibers having a freeness of 350 ml.
Fig. 5 is a fiber diameter distribution histogram of natural cellulose fibers having a freeness of 550 ml.
Fig. 6 is a fiber diameter distribution histogram of organic solvent-based cellulose fibers having a freeness of 50 ml.
Fig. 7 is a fiber diameter distribution histogram of organic solvent-based cellulose fibers having a freeness of 250 ml.

EMBODIMENTS OF THE INVENTION

[Separator for electrochemical elements]

The separator for electrochemical elements (hereinafter, also simply referred to as a "separator") of the present invention comprises synthetic fibers and beaten cellulose fibers. The beaten cellulose fibers have a Canadian standard freeness of 50 ml or more and 500 ml or less, and in a fiber diameter distribution histogram of the beaten cellulose fibers, (1) the fibers have a maximum frequency peak in a range of 50 μm or less, and (2) a ratio of the fibers having a fiber diameter of 20 μm or less is 55% or more.

<Synthetic fiber>

The separator of the present invention has high strength owing to the inclusion of synthetic fibers.

Examples of the synthetic fibers include polyvinyl alcohol-based fibers, ethylene-vinyl alcohol-based copolymer fibers, polyester-based fibers, polypropylene fibers, polyethylene fibers, polypropylene-polyethylene composite fibers, polyamide fibers, polyamide-modified polyamide composite fibers and the like. These may be used singly or two or more of them may be used in combination.

Among them, from the viewpoint that the strength of the separator is likely to be improved, preferable synthetic fibers are polyvinyl alcohol-based fibers and polyester-based fibers, and from the viewpoint that the separator is likely to be thinned and that a low-resistance separator is likely to be obtained, polyvinyl alcohol-based fibers are more preferable.

The vinyl alcohol-based polymer constituting the polyvinyl alcohol-based fibers is not particularly limited, and may be, for example, a vinyl alcohol-based polymer having an average polymerization degree of 1000 to 5000 and a saponification degree of 95% by mole or more. The vinyl alcohol-based polymer may be a homopolymer of vinyl alcohol or may be a copolymer of vinyl alcohol and another copolymer component. When the vinyl alcohol-based polymer contains another copolymer component, the ratio of the copolymer component in the vinyl alcohol-based polymer is preferably 20% by mole or less, and more preferably 10% by mole or less, from the viewpoint of water resistance, etc. The vinyl alcohol-based polymer may have been subjected to some treatment such as acetalization, as necessary.

In the present invention, the polyvinyl alcohol-based fiber as the synthetic fiber may be composed of only a vinyl alcohol-based polymer, or may be a composite spun fiber, a mixed spun fiber (sea-island fiber), or the like of a vinyl alcohol-based polymer and another polymer. The ratio of the polyvinyl alcohol-based polymer in the polyvinyl alcohol-based fiber is preferably 30% by weight or more, more preferably 50% by weight or more, and even more preferably 80% by weight or more, based on the total mass of the polyvinyl alcohol-based fiber, from the viewpoint of absorbent property for electrolyte solutions and strength. The upper limit value of the ratio is not particularly limited and may be, for example, 100% by mass or less.

From the viewpoint of the heat resistance of the separator, the polyvinyl alcohol-based fiber as the synthetic fiber preferably has been heat-treated. The heat treatment temperature is not particularly limited, and may be, for example, 60°C or higher and 210°C or lower. The heat treatment time is not particularly limited, and may be, for example, 1 second or more and 30 minutes or less.

In one embodiment of the present invention, the number average fiber diameter of the synthetic fibers is preferably 0.1 μm or more, more preferably 0.5 μm or more, and even more preferably 1.0 μm or more from the viewpoint of the shielding property of the separator. From the viewpoint that the separator is likely to be thinned, the number average fiber diameter is preferably 20 μm or less, more preferably 15 μm or less, and even more preferably 10 μm or less. The number average fiber diameter of the synthetic fibers can be measured with a "Fiber Tester" manufactured by Lorentzen & Wettre.

In one embodiment of the present invention, the fineness of the synthetic fibers is preferably 0.1 dtex or more, and more preferably 0.2 dtex or more from the viewpoint of the shielding property (air permeability) of the separator. From the viewpoint that the separator is likely to be thinned (a thin separator is likely to be obtained), the fineness is preferably 1.0 dtex or less, more preferably 0.8 dtex or less, and even more preferably 0.6 dtex or less. The fineness of the synthetic fibers can be measured with an optical microscope or an electron microscope (SEM).

Examples of the cross-sectional shape of the synthetic fiber include a circular shape, an elliptical shape, a cocoon shape, and a flat shape, and from the viewpoint that the separator is likely to be thinned, the cocoon shape is preferable.

In a preferred embodiment of the present invention, from the viewpoint that the strength of the separator is likely to be improved, the content of the synthetic fibers is 1% by mass or more and 55% by mass or less based on the total mass of the separator. The content of the synthetic fibers is more preferably 5% by mass or more, even more preferably 10% by mass or more, and particularly preferably 15% by mass or more based on the total mass of the separator from the viewpoint that strength of the separator is more likely to be improved. From the viewpoint that the separator is likely to be thinned, the content is more preferably 50% by mass or less, even more preferably 40% by mass or less, and particularly preferably 30% by mass or less based on the total mass of the separator.

<Beaten cellulose fiber>

Since the separator of the present invention contains beaten cellulose fibers having a specific freeness and a specific fiber diameter distribution, the separator is likely to be thinned without reducing the basis weight, so that both the maintenance of high strength and thinning can be achieved. It is noted that "beaten cellulose fiber" means cellulose fiber prepared by beating.

The beaten cellulose fibers in the present invention have a Canadian standard freeness measured in accordance with JIS P 8121 of 50 ml or more and 500 ml or less. When the freeness is out of the above range, it is difficult to secure the function as the separator. Specifically, when the freeness is less than the above lower limit value, the air permeability of the separator excessively decreases, so that the resistance value is likely to increase, and when the freeness exceeds the above upper limit value, the air permeability excessively increases, so that the shielding property is likely to decrease. When the freeness exceeds the above upper limit value, separators are hardly thinned. The freeness is preferably 100 ml or more, more preferably 150 ml or more, and even more preferably 200 ml or more from the viewpoint that the strength and shielding property of the separator are likely to be improved. In addition, the freeness is preferably 400 ml or less, more preferably 350 ml or less, and even more preferably 300 ml or less from the viewpoint that the separator is likely to be thinned and that resistance value of the separator is likely to be lower. The freeness can be adjusted by the degree of beating of beaten cellulose fibers and the method of beating treatment for cellulose fibers.

The beaten cellulose fibers in the present invention have a maximum frequency peak in a range of 50 μm or

less in a fiber diameter distribution histogram of the beaten cellulose fibers. When the range having the maximum frequency peak exceeds the upper limit value, it is difficult to maintain the strength of the separator and thin the separator simultaneously, and it is difficult to obtain a thin separator having high strength. In one embodiment of the present invention, from the viewpoint that a thinner separator is likely to be obtained, the upper limit value of the range having the maximum frequency peak is preferably 40 $\mu$m or less, more preferably 30 $\mu$m or less, and even more preferably 20 $\mu$m or less. The lower limit value of the range is not particularly limited from the viewpoint that the separator is likely to be thinned and may usually be more than 0 $\mu$m, and from the viewpoint that the resistance of the separator is likely to reduce, the lower limit value is preferably 6 $\mu$m or more, more preferably 10 pm or more, and even more preferably 14 $\mu$m or more.

The fiber diameter distribution histogram of beaten cellulose fibers is made using fiber diameter data of the beaten cellulose fibers.

The fiber diameter data to be used for making the histogram are obtained by first dispersing 100 g of beaten cellulose fibers in 10 L of water to prepare a slurry, and then measuring the fiber diameter of the beaten cellulose fibers using the prepared slurry by, for example, the method described in Examples using a "Fiber Tester" manufactured by Lorentzen & Wettre.

In the present invention, the class width of the fiber diameter histogram of the beaten cellulose fibers may be appropriately set according to an analyzer or the like such that whether or not the fibers have a desired fiber diameter can be confirmed, and is preferably 10 or less, more preferably 5 or less, even more preferably 3 or less, and particularly preferably 2 or less.

In the present invention, the maximum frequency peak in the fiber diameter distribution histogram refers to a class (or data section) having the highest frequency in the fiber diameter distribution histogram. In the histogram, when there are two or more classes having the highest frequency, a class including a larger fiber diameter among the classes having the highest frequency is taken as the maximum frequency peak.

The maximum frequency peak can be adjusted by the freeness, type, etc. of the beaten cellulose fibers.

In addition, as to the beaten cellulose fibers in the present invention, the ratio of fibers having a fiber diameter of 20 $\mu$m or less is 55% or more in a fiber diameter distribution histogram of the beaten cellulose fibers. When the ratio is less than the lower limit value, it is difficult to maintain the strength of the separator and thin the separator simultaneously. In one embodiment of the present invention, the ratio is preferably 60% or more, more preferably 63% or more, and even more preferably 65% or more from the viewpoint that a thinner separator is likely to be obtained. In the present invention, the ratio of fibers having a fiber diameter of 20 $\mu$m or less in a fiber diameter distribution histogram means the ratio of the total of frequencies from a class including the smallest fiber diameter to a class including a fiber diameter of 20 $\mu$m (the total of frequencies of 20 $\mu$m or less) to the total of frequencies (the total frequency) of all classes (all data sections) of the fiber diameter distribution histogram ((the total of frequencies of 20 $\mu$m or less/the total frequency)$\times$100). For example, when the class width of the fiber diameter distribution histogram is 2, the ratio is the ratio of the total of frequencies from a class including the minimum fiber diameter to a class of 20 $\mu$m or more and less than 22 $\mu$m (the total of frequencies of 20 $\mu$m or less) to the total of frequencies (the total frequency) of all classes of the fiber diameter distribution histogram ((the total of frequencies of 20 $\mu$m or less/the total frequency)$\times$100).

In one embodiment of the present invention, from the viewpoint that both maintaining the strength of the separator and thinning the separator is likely to be achieved, it is preferable that, in the fiber diameter distribution histogram of the beaten cellulose fibers, the ratio of beaten cellulose fibers having a fiber diameter of 30 $\mu$m or less is 90% or more, more preferably 92% or more, and even more preferably 95% or more. In the present invention, the ratio of fibers having a fiber diameter of 30 $\mu$m or less in a fiber diameter distribution histogram means the ratio of the total of frequencies from a class including the smallest fiber diameter to a class including a fiber diameter of 30 $\mu$m (the total of frequencies of 30 $\mu$m or less) to the total of frequencies (the total frequency) of all classes (all data sections) of the fiber diameter distribution histogram ((the total of frequencies of 30 $\mu$m or less/the total frequency)$\times$100). For example, when the class width of the fiber diameter distribution histogram is 2, the ratio is the ratio of the total of frequencies from a class including the minimum fiber diameter to a class of 30 $\mu$m or more and less than 32 $\mu$m (the total of frequencies of 30 $\mu$m or less) to the total of frequencies (the total frequency) of all classes ((the total of frequencies of 30 $\mu$m or less/the total frequency)$\times$100).

The upper limits of the ratio of the fibers of 20 $\mu$m or less and the ratio of the fibers of 30 $\mu$m or less are not particularly limited, and may be 100% or less because the separator tends to be thinned as the ratios increase.

In a preferred embodiment of the present invention, from the viewpoint that both maintaining the strength of the separator and thinning the separator is likely to be achieved, it is preferable that, in the fiber diameter distribution histogram of the beaten cellulose fibers in the present invention, the ratio of fibers having a fiber diameter of more than 30 $\mu$m is 10% or less, more preferably 8% or less, and even more preferably 5% or less. The ratio of fibers having a fiber diameter of more than 30 $\mu$m in a fiber diameter distribution histogram means the ratio of the total of frequencies from a class next to a class including the fiber diameter of 30 $\mu$m to a class including the maximum fiber diameter (the total of frequencies of more than 30 $\mu$m) to the total of frequencies (the total frequency) of all classes (all data sections) of the fiber diameter distribution histogram ((the total of frequencies of more than 30 μm/the total frequency)×100). For example, when the class width of the fiber diameter distribution histogram is 2, the ratio is the ratio of the total of frequencies from a class of 32 μm or more and less than 34 μm to a class including the maximum fiber diameter (the total of frequencies of 32 μm or more) to the total of frequencies (the total frequency) of all classes ((the total of frequencies of 32 μm or more/the total frequency)×100). The lower limit of the ratio of the fibers having a fiber diameter of more than 30 μm is not particularly limited, and may be 0% because the separator tends to be thinned as the ratio decrease.

The ratio of each of the fibers having a fiber diameter of 20 μm or less, the fibers having a fiber diameter of 30 μm or less, and the fibers having a fiber diameter of more than 30 μm in the fiber diameter distribution histogram of the beaten cellulose fibers can be adjusted by the freeness and the type of the beaten cellulose fibers.

The number average fiber diameter of the beaten cellulose fibers is preferably 20 μm or less, more preferably 19 μm or less, and even more preferably 18.5 μm or less from the viewpoint that the separator is likely to be thinned, and is preferably 10 μm or more, more preferably 13 μm or more, and even more preferably 15 μm or more from the viewpoint that the resistance value of the separator is likely to be lowered.

The maximum fiber diameter of the beaten cellulose fibers is preferably 70 μm or less, more preferably 69 μm or less, and even more preferably 67 μm or less from the viewpoint that the separator is likely to be thinned, and is preferably 40 μm or more, more preferably 50 μm or more, and even more preferably 55 μm or more from the viewpoint that the resistance value of the separator is likely to be lowered.

The minimum fiber diameter of the beaten cellulose fibers is preferably 1 μm or more, more preferably 3 μm or more, and even more preferably 6 μm or more from the viewpoint that the resistance value of the separator is likely to be lowered, and is preferably 15 μm or less, more preferably 14 μm or less, and even more preferably 12 μm or less from the viewpoint that the separator is likely to be thinned.

The number average fiber diameter, the maximum fiber diameter, and the minimum fiber diameter of the beaten cellulose fibers can be adjusted by the freeness, the type, etc. of the beaten cellulose fibers. In addition, these fiber diameters can be calculated from a fiber diameter measured using a "Fiber Tester " manufactured by Lorentzen & Wettre.

In the present invention, the beaten cellulose fibers are not particularly limited as long as the beaten cellulose fibers have a freeness of 50 ml or more and 500 ml or less, have a maximum frequency peak in a range of 50 μm or less, and have a ratio of the fibers having a fiber diameter of 20 μm or less of 55% or more in a fiber diameter histogram of the fibers. For example, the beaten cellulose fibers may be natural cellulose fibers prepared by beating, organic solvent-based cellulose fibers prepared by beating, or a mixture thereof. The organic solvent-based cellulose fiber is a cellulose fiber (lyocell) obtained by an organic solvent spinning process in which cellulose is directly dissolved and spun without going via a derivative.

In a preferred embodiment of the present invention, the beaten cellulose fibers are beaten natural cellulose fibers from the viewpoint that the separator is likely to be thinned. The organic solvent-based cellulose fiber is turned by beating into a fiber having a thick portion serving as a stem and a thin portion serving as a branch extending from the thick portion serving as the stem, and the thick portion serving as the stem has, even after beating, a fiber diameter similar to the fiber diameter of the fiber before beating. In contrast, the natural cellulose fiber, when beaten, is less likely to generate a thick portion serving as a stem, which is generated when an organic solvent-based cellulose fiber is beaten, and thus the fiber diameter thereof is likely to be reduced by beating. Accordingly, since natural cellulose fibers are easily controlled such that the upper limit value of a range having a maximum frequency peak in a histogram of beaten cellulose fibers is made smaller (for example, to 50 μm or less) and the ratio of fibers having a fiber diameter of 20 μm or less is made higher (for example, to 55% or more), it is likely to obtain a thinner separator by using natural cellulose fibers.

From the viewpoint that the separator is likely to be thinned when natural cellulose fibers are used as the beaten cellulose fibers, the content of the natural cellulose fibers is preferably 60% by mass or more, more preferably 80% by mass or more, and even more preferably 90% by mass or more based on the total mass of the beaten cellulose fibers. The upper limit value of the content is not particularly limited, and may be, for example, 100% by mass or less.

Examples of the natural cellulose fibers include wood pulp such as softwood pulp and hardwood pulp, cotton linter pulp, and hemp pulp, and wood pulp is preferable. These natural cellulose fibers may be used singly or two or more types thereof may be used in combination. In addition, from the viewpoint of form stability of the separator, the natural cellulose fibers are preferably mercerized.

Examples of the cross-sectional shape of the beaten cellulose fiber include a circular shape, an elliptical shape, a cocoon-shape, and a flat shape, and from the viewpoint that the separator is likely to be thinned, a flat shape is preferable.

Beaten cellulose fibers can be prepared by beating cellulose fibers such as natural cellulose fibers and organic solvent-based cellulose fibers. The method for beating cellulose fibers is not particularly limited, and for example, the cellulose fibers may be treated in accordance with JIS P-8221-1-98.

In a preferred embodiment of the present invention, from the viewpoint that the separator is likely to be thinned, the content of the beaten cellulose fibers is 30% by mass or more and 95% by mass or less based on the total mass of the separator. The content of the beaten cellulose fibers is more preferably 50% by mass or more, even more preferably 60% by mass or more, and particularly preferably 70% by mass or more from the viewpoint that the separator is likely to be thinned. From the viewpoint that the strength of the separator is likely to be improved, the content is more preferably 90% by mass or less, even more preferably 85% by mass or less, and particularly preferably 80% by mass or less.

< Other Fibers >

The separator of the present invention may contain other fibers in addition to the above-described synthetic fibers and beaten cellulose fibers, as necessary. Other fibers are not particularly limited as long as the effect of the present invention is not impaired, and examples thereof include cellulose fibers other than the beaten cellulose fibers in the present invention. When the separator contains other fibers, the content of the other fibers is not limited as long as the effect of the present invention is not impaired, and may be, for example, 0.1% by mass or more and 20% by mass or less based on the total mass of the separator. The content of the other fibers is preferably 15% by mass or less, more preferably 10% by mass or less, and even more preferably 5% by mass or less from the viewpoint that the separator is likely to be thinned.

< Binder >

In a preferred embodiment of the present invention, the separator of the present invention further contains a binder from the viewpoint that the strength of the separator is likely to be improved. The binder is not particularly limited, and is preferably one that can bond fibers contained in the separator to each other. Examples of the binder include polyvinyl alcohol-based binders and ethylene-vinyl alcohol-based binders. Among them, polyvinyl alcohol-based binders are preferable from the viewpoint that the strength of the separator is likely to be improved.
The vinyl alcohol-based polymer constituting the polyvinyl alcohol-based binder may be the same as the vinyl alcohol-based polymer constituting the polyvinyl alcohol-based fiber as the synthetic fiber.
The raw material form of the binder contained in the separator is not particularly limited, and may be, for example, a fibrous form, a powder form, a solution form, or the like, and from the viewpoint that the mutual adhesiveness of the fibers contained in the separator is likely to be improved, the raw material form is preferably a fibrous form.
When a polyvinyl alcohol-based fiber is used as the polyvinyl alcohol-based binder raw material, the polyvinyl alcohol-based fiber can be polyvinyl alcohol-based fibers described above as the synthetic fibers. However, from the viewpoint of easily improving the adhesiveness of the synthetic fiber to the beaten cellulose fiber, it is preferable that the polyvinyl alcohol-based fiber as a binder raw material has not been heat-treated.
In a preferred embodiment of the present invention, when the separator contains a binder, the content of the binder is 0.5% by mass or more and 20% by mass or less based on the total mass of the separator from the viewpoint that the strength of the separator is likely to be improved. The content of the binder is more preferably 1% by mass or more, even more preferably 2% by mass or more, and particularly preferably 3% by mass or more based on the total mass of the separator from the viewpoint that the strength of the separator is likely to be improved and that the separator is likely to be thinned. From the viewpoint that the resistance value of the separator is likely to be reduced, the content is more preferably 15% by mass or less, even more preferably 10% by mass or less, and particularly preferably 8% by mass or less based on the total mass of the separator.

<Separator for electrochemical elements>

In the present invention, since the separator contains synthetic fibers and beaten cellulose fibers having a specific freeness and a specific fiber diameter distribution, a thin separator having high strength can be obtained. The thickness of the separator of the present invention may be appropriately chosen according to the type, etc. of the electrochemical element including the separator, and may be, for example, 10 $\mu$m or more and less than 70 $\mu$m. In addition, from the viewpoint that a separator capable of improving the performance of an electrochemical element and reducing the size and weight thereof is likely to be obtained, the thickness of the separator of the present invention is preferably 60 $\mu$m or less, more preferably 55 $\mu$m or less, and even more preferably 53 $\mu$m or less. From the viewpoint that the strength of the separator is likely to be improved, the thickness is preferably 20 $\mu$m or more, more preferably 30 $\mu$m or more, and even more preferably 35 $\mu$m or more. The thickness of the separator can be adjusted by the freeness and fiber diameter distribution of the beaten cellulose fibers and the basis weight, etc. of the separator. The thickness of the separator can be measured in accordance with JIS P 8118.
The basis weight of the separator of the present invention is preferably 10 g/m$^2$ or more, more preferably 15 g/m$^2$ or more, and even more preferably 18 g/m$^2$ or more from the viewpoint that the strength of the separator is likely to be improved, and is preferably 30 g/m$^2$ or less, more preferably 25 g/m$^2$ or less, and even more preferably 23 g/m$^2$ or less from the viewpoint that the separator is likely to be thinned. The basis weight can be measured in accordance with JIS P 8124.
Since the separator of the present invention contains synthetic fibers and beaten cellulose fibers having a specific freeness and a specific fiber diameter distribution, the separator has high strength even when it is thin. The strength of the separator of the present invention is preferably 0.3 kg/15 mm or more, more preferably 0.35 kg/15 mm or more, and even more preferably 0.4 kg/15 mm or more from the viewpoint that the durability of the separator and the electrochemical element including the separator is likely to be improved. Since the durability tends to increase as the strength increases, the upper limit value is not particularly limited and may be 1.0 kg/15 mm or less. The strength can be adjusted by the content of the synthetic fibers in the separator, the basis weight, etc. The strength can be measured in accordance with JIS P -8113 using a tensile tester.

The air permeability of the separator of the present invention is preferably 5.5 cc/cm$^2$/sec or more, more preferably 6.0 cc/cm$^2$/sec or more, and even more preferably 6.5 cc/cm$^2$/sec or more from the viewpoint that the resistance value of an electrochemical element including the separator is likely to be lowered, and is preferably 20 cc/cm$^2$/sec or less, more preferably 18 cc/cm$^2$/sec or less, and even more preferably 15 cc/cm$^2$/sec or less from the viewpoint that the shielding property of the separator is likely to be improved. The air permeability of the separator can be adjusted by the freeness of the beaten cellulose fibers, the fiber configuration of the separator (for example, the content ratio of synthetic fibers and the beaten cellulose fibers in the separator), etc. The air permeability can be measured in accordance with JIS L 1096 6.27.

The resistance of the separator of the present invention is preferably 3.0 Ω or less, more preferably 2.8 Ω or less, and even more preferably 2.5 Ω or less from the viewpoint of practicability of the separator. The resistance value of the separator can be adjusted by the freeness of the beaten cellulose fibers, the fiber configuration contained in the separator, etc. The resistance value of the separator can be measured by a resistance measuring apparatus, for example, by the method described in Examples.

[Method for manufacturing separator for electrochemical elements]

The method for manufacturing the separator of the present invention is not particularly limited, and the separator can be manufactured by a publicly-known papermaking process. For example, it can be manufactured by mixing synthetic fibers and beaten cellulose fibers, and if necessary, other fibers and/or a binder, then dispersing them in water to prepare a slurry, and performing papermaking using a common wet papermaking machine.

Examples of the papermaking screen used in the papermaking machine include a cylinder screen, a short screen, and a long screen, and each of these papermaking screens may be used singly to form a single layer, or a combination of these papermaking screens may be used to form multiple layers together. From the viewpoint of obtaining a uniform paper having superior electrical characteristics with no texture unevenness, multilayer papermaking is preferred, and double-layer papermaking using a short screen-cylinder screen papermaking machine is particularly preferred. A desired separator is obtained by performing papermaking with a wet papermaking machine and then drying with a Yankee dryer or the like. In addition, hot pressing or the like may be performed, as necessary. Furthermore, from the viewpoint of improving the absorbent property for electrolyte solutions, hydrophilization treatment such as surfactant treatment may be performed.

[Electrochemical element]

The present invention also includes an electrochemical element including the separator of the present invention. Since the separator of the present invention can be thinned while maintaining high strength, it is possible to improve the performance of the electrochemical element and reduce the size and weight of the electrochemical element without deteriorating the durability of the electrochemical element.

Examples of the electrochemical element include an electric double layer capacitor, a lithium ion capacitor, an aluminum electrolytic capacitor, a lithium ion secondary battery, a sodium ion secondary battery, and a sodium sulfur secondary battery. Among these electrochemical elements, the separator of the present invention is suitable for a capacitor such as an electric double layer capacitor or a lithium ion capacitor.

The electrochemical element of the present invention comprises a positive electrode, a negative electrode, and an electrolytic solution in addition to the separator of the present invention. The positive electrode and the negative electrode included in the electrochemical element are not particularly limited, and may be, for example, a positive electrode and a negative electrode each publicly-known and used in electrochemical elements. The electrolytic solution is also not particularly limited, and may be, for example, an organic electrolytic solution (non-aqueous electrolytic solution). Examples of the organic electrolytic solution include an electrolytic solution in which a salt of a tetraalkylammonium cation and an anion such as $BF_4^-$, $PF_6^-$, or $SO_3CF_3^-$ is dissolved in an organic solvent such as propylene carbonate or ethylene carbonate.

The shape of the separator in the electrochemical element is not particularly limited, and examples thereof include a cross strip (cross-structured bottomed cylindrical shape), a round strip (cylindrical wound shape), and a spiral (spiral wound structure).

The method for manufacturing the electrochemical element is not particularly limited, and the electrochemical element can be manufactured according to a conventionally publicly-known method.

EXAMPLES

Hereinafter, the present invention is described specifically by way of Examples and Comparative Examples, but the present invention is not limited to the following Examples.

Physical properties of beaten cellulose fibers were measured and evaluated by the following methods.

[Freeness of beaten cellulose fibers]

The Canadian standard freeness was measured in accordance with JIS P-8121 (Pulps -- Determination of drainability) using a Canadian standard freeness tester ("Canadian Freeness Tester" manufactured by Kumagai Riki Kogyo Co., Ltd.).

[Fiber diameter and fiber diameter distribution of beaten cellulose fiber]

(1) Number average fiber diameter and maximum fiber diameter

A slurry was prepared by dispersing 100 g of beaten cellulose fibers in 10 L of water. Using the obtained slurry, the fiber diameter of the beaten cellulose fibers was measured under the following conditions with a "Fiber Tester" manufactured by Lorentzen & Wettre.

Measurement conditions:

Mode: automatic mode
Data section (range of fiber diameter): 0 to 100 $\mu$m
Class width: 2

From the fiber diameter data of the beaten cellulose fibers obtained by the measurement, the number average fiber diameter and the maximum fiber diameter of the beaten cellulose fibers were calculated. The results are shown in Table 1.

(2) Maximum frequency peak in fiber diameter distribution histogram

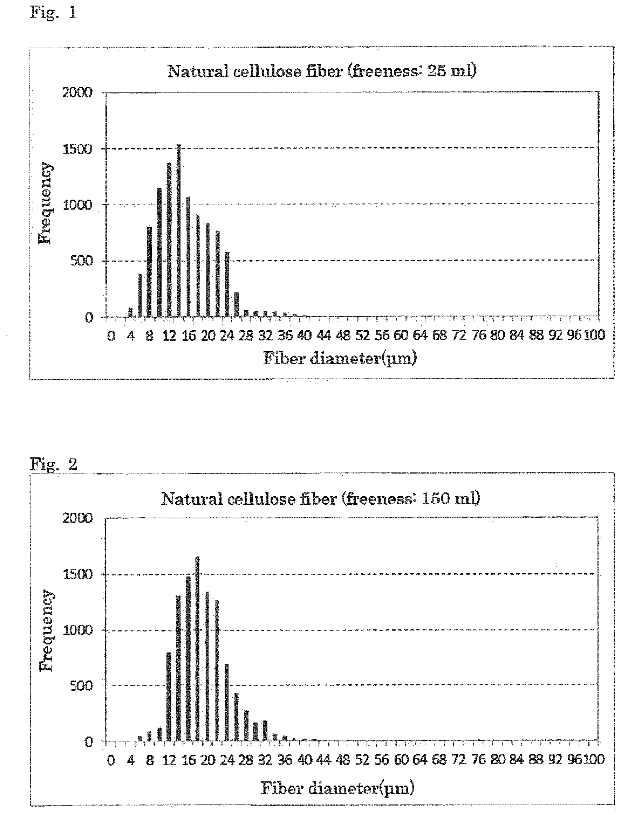

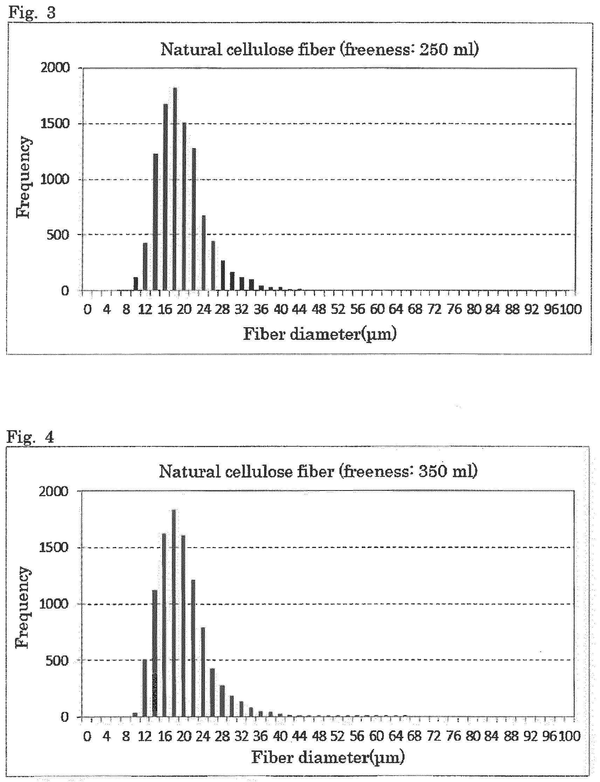

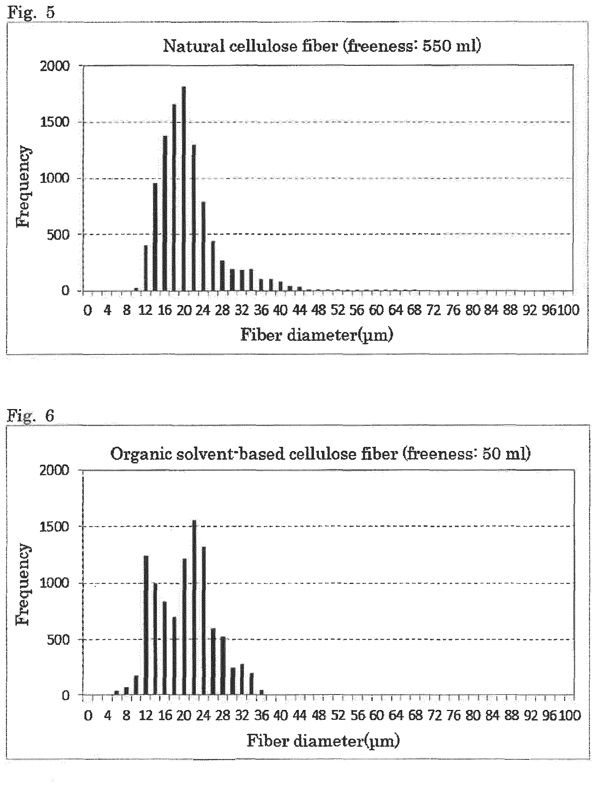

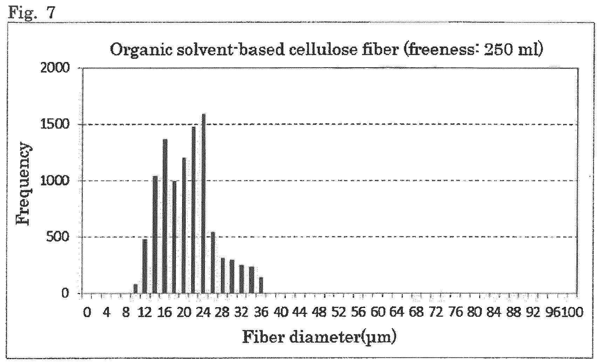

A fiber diameter distribution histogram (class width: 2) of beaten cellulose fibers was prepared using the fiber diameter data of the beaten cellulose fibers obtained by the measurement in the above (1). Fig. 1 to Fig. 7 show fiber diameter distribution histograms of beaten cellulose fibers with each freeness. The fiber diameter on the horizontal axis in a diagram represents the lower limit fiber diameter at each class (for example, the indication of 20 $\mu$m on the horizontal axis represents a class with fiber diameter of 20 $\mu$m or more and less than 22 $\mu$m).

In the fiber diameter distribution histogram of prepared beaten cellulose fibers, the class with the highest frequency was adopted as the maximum frequency peak. The fiber diameter at the maximum frequency peak is shown in Table 1. The fiber diameter at the maximum frequency peak was the lower limit fiber diameter of the class with the highest frequency. For example, when the class with the highest frequency was 18 $\mu$m or more and less than 20 $\mu$m, the fiber diameter at the maximum frequency peak was 18 $\mu$m.

(3) Ratio of fibers having specific fiber diameter in fiber diameter distribution histogram

For the beaten cellulose fibers, the ratios of fiber having a fiber diameter of 20 $\mu$m or less, fibers having a fiber diameter of 30 $\mu$m or less, and fibers having a fiber diameter of more than 30 $\mu$m were calculated by the following equations after determining, from the histogram, the total of frequencies of all classes (all data sections) (the total frequency), the total of frequencies from a class containing the minimum fiber diameter to a class of 20 $\mu$m or more and less than 22 $\mu$m (the total of frequencies of 20 $\mu$m or less), the total of frequencies from a class containing the minimum fiber diameter to a class of 30 $\mu$m or more and less than 32 $\mu$m (the total of frequencies of 30 $\mu$m or less), and the total of frequencies from a class of 32 $\mu$m or more and less than 34 $\mu$m to a class containing the maximum fiber diameter (the total of frequencies of more than 30 $\mu$m).

$$\text{Ratio of fibers having fiber diameter of 20 μm or less} = \text{(the total of frequencies of 20 μm or less/the total frequency)} \times 100$$

$$\text{Ratio of fibers having fiber diameter of 30 μm or less} = \text{(the total of frequencies of 30 μm or less/the total frequency)} \times 100$$

$$\text{Ratio of fibers having fiber diameter of more than 30 μm} = \text{(the total of frequencies of more than 30 μm/the total frequency)} \times 100$$

Physical properties of the separators obtained in Examples and Comparative Examples were measured by the following methods. The measurement results are shown in Table 1.

[Basis weight]

The basis weight was measured in accordance with JIS P 8124 (Paper and board -- Determination of grammage).

[Thickness]

The thickness was measured in accordance with JIS P 8118 (Paper and board-Determination of thickness and density).

[Strength]

The strength was measured using a tensile tester ("5543" manufactured by Instron Corporation) in accordance with JIS P-8113 (Paper and board -- Determination of tensile properties).

[Air permeability]

The air permeability was measured using an air permeability tester ("KES-F8-AP1" manufactured by Kato Tech Co., Ltd.) in accordance with JIS L 1096 6.27 (General Fabric Testing Method, Air Permeability).

[Resistance value]

The resistance values of the separators obtained in Examples and Comparative Examples were measured in an automatic mode using a resistance measuring apparatus ("KC-547 LCR METER" manufactured by Kokuyo Electric Co., Ltd.). Specifically, five separators obtained in Examples and Comparative Examples were stacked to prepare a sample for resistance measurement, and the sample for resistance measurement was immersed in an electrolytic solution (reagent for capacitors "electrolytic solution CAPASTE" manufactured by Tomiyama Pure Chemical Industries, Ltd.) for 1 hour, then the sample for resistance measurement was taken out from the electrolytic solution, and the sample for resistance measurement was sandwiched by platinum at the upper and lower sides, and the resistance was measured using the apparatus mentioned above.

(Example 1)

Natural cellulose fibers (mercerized wood pulp) (minimum fiber diameter: 5 μm, maximum fiber diameter: 70 μm) were beaten in accordance with JIS P-8221-1-98 (Pulps-Laboratory beating -- Part 1 : Beater method) with a refiner ("Niagara beater for testing" manufactured by Kumagai Riki Kogyo Co., Ltd.), affording beaten cellulose fibers having a freeness adjusted to 150 ml. 75% by mass of the obtained natural cellulose fibers having a freeness of 150 ml, 20% by mass of polyvinyl alcohol-based fibers (Vinylon, VN 30300 manufactured by Kuraray Co., Ltd.) of 0.3 dtex × 3 mm, and 5% by mass of a polyvinyl alcohol-based binder (Vinylon binder: VPB107-1×3 manufactured by Kuraray Co., Ltd.) of 1.1 dtex × 3 mm were dispersed in water to prepare a slurry (total mass of synthetic fibers, beaten cellulose fibers and binder : water = 100 g : 10 L), and two-layer papermaking was performed with a papermaking machine ("square sheet machine (25 cm square)" manufactured by Kumagai Riki Kogyo Co., Ltd.) in accordance with JIS P-8222 (Pulps-Preparation of laboratory sheets for physical testing-). The resulting paper was dried at 120°C for 1 minute with a carried-in moisture of 70% using a rotary dryer ("Rotary Dryer DR-200 " manufactured by Kumagai Riki Kogyo Co., Ltd.), affording an electric double layer capacitor (EDLC) separator having a basis weight of 20 g/m$^2$ and a thickness of 48 $\mu$m.

(Example 2)

An EDLC separator having a basis weight of 20 g/m$^2$ and a thickness of 50 $\mu$m was obtained in the same manner as in Example 1 except that the freeness of the beaten cellulose fibers was adjusted to 250 ml.

(Example 3)

An EDLC separator having a basis weight of 20 g/m$^2$ and a thickness of 52 $\mu$m was obtained in the same manner as in Example 1 except that the freeness of the beaten cellulose fibers was adjusted to 350 ml.

(Example 4)

An EDLC separator having a basis weight of 20 g/m$^2$ and a thickness of 51 $\mu$m was obtained in the same manner as in Example 1 except that the freeness of the beaten cellulose fibers was adjusted to 250 ml, the blending amount of the beaten cellulose fibers was changed to 77.5% by mass, and the blending amount of the polyvinyl alcohol-based binder was changed to 2.5% by mass.

(Example 5)

An EDLC separator having a basis weight of 20 g/m$^2$ and a thickness of 52 $\mu$m was obtained in the same manner as in Example 1 except that the freeness of the beaten cellulose fibers was adjusted to 250 ml, the blending amount of the beaten cellulose fibers was changed to 79.5% by mass, and the blending amount of the polyvinyl alcohol-based binder was changed to 0.5% by mass.

(Example 6)

An EDLC separator having a basis weight of 18 g/m$^2$ and a thickness of 45 $\mu$m was obtained in the same manner as in Example 2 except that the basis weight was adjusted to 18 g/m$^2$.

(Example 7)

An EDLC separator having a basis weight of 18 g/m$^2$ and a thickness of 46 $\mu$m was obtained in the same manner as in Example 3 except that the basis weight was adjusted to 18 g/m$^2$.

(Example 8)

An EDLC separator having a basis weight of 20 g/m$^2$ and a thickness of 50 $\mu$m was obtained in the same manner as in Example 1 except that polyester-based fibers of 0.4 dtex × 3 mm (Polyester, EP043, manufactured by Kuraray Co., Ltd.) were used as synthetic fibers in place of the polyvinyl alcohol-based fibers.

(Example 9)

An EDLC separator having a basis weight of 20 g/m$^2$ and a thickness of 53 $\mu$m was obtained in the same manner as in Example 1 except that the blending amount of the beaten cellulose fibers was changed to 40% by mass and the blending amount of the polyvinyl alcohol-based fibers was changed to 55% by mass.

(Example 10)

An EDLC separator having a basis weight of 20 g/m$^2$ and a thickness of 46 $\mu$m was obtained in the same manner as in Example 1 except that the blending amount of the beaten cellulose fibers was changed to 90% by mass and the blending amount of the polyvinyl alcohol-based fibers was changed to 5% by mass.

(Example 11)

An EDLC separator having a basis weight of 15 g/m$^2$ and a thickness of 42 $\mu$m was obtained in the same manner as in Example 1 except that the basis weight was adjusted to 15 g/m$^2$.

(Comparative Example 1)

An EDLC separator having a basis weight of 20 g/m$^2$ and a thickness of 41 $\mu$m was obtained in the same manner as in Example 1 except that the freeness of the beaten cellulose fibers was adjusted to 25 ml.

(Comparative example 2)

An EDLC separator having a basis weight of 20 g/m$^2$ and a thickness of 55 $\mu$m was obtained in the same manner as in Example 1 except that the freeness of the beaten cellulose fibers was adjusted to 550 ml.

(Comparative example 3)

Organic solvent-based cellulose fibers "Lyocell" ("Lyocell" manufactured by Lenzing AG) were beaten in the same manner as in Example 1, and 100% by mass of beaten cellulose fibers adjusted to a freeness of 50 ml were dispersed in water to prepare a slurry (beaten cellulose fibers : water = 100 g : 10 L), and then papermaking and drying were performed in the same manner as in Example 1, affording an EDLC separator having a basis weight of 20 g/m$^2$ and a thickness of 55 $\mu$m.

(Comparative example 4)

An EDLC separator having a basis weight of 17 g/m$^2$ and a thickness of 50 $\mu$m was obtained in the same manner as in Comparative Example 3 except that the basis weight was adjusted to 17 g/m$^2$.

(Comparative Example 5)

An EDLC separator having a basis weight of 15 g/m$^2$ and a thickness of 45 $\mu$m was obtained in the same manner as in Comparative Example 3 except that the basis weight was adjusted to 15 g/m$^2$.

(Comparative Example 6)

An EDLC separator having a basis weight of 20 g/m$^2$ and a thickness of 59 $\mu$m was obtained in the same manner as in Comparative Example 3 except that the freeness of the organic solvent-based cellulose fibers was adjusted to 250 ml.

[Table 1]

| | | Examples | | | | | | | | | | | Comparative Examples | | | | | |
|---|---|---|---|---|---|---|---|---|---|---|---|---|---|---|---|---|---|---|
| | | 1 | 2 | 3 | 4 | 5 | G | 7 | 8 | 9. | 10 | 11 | 1 | 2 | 3 | 4 | 5 | 6 |
| Beaten cellulose fiber (% by mass) | Natural cellulose fiber (freeness: 25 ml) | | | | | | | | | | | | 75 | | | | | |
| | Natural cellulose fiber (freeness: 150 ml) | 75 | | | | | | | 75 | 40 | 90 | 75 | | | | | | |
| | Natural cellulose fiber (freeness: 250 ml) | | 75 | | 77.5 | 79.5 | 75 | | | | | | | | | | | |
| | Natural cellulose fiber (freeness: 350 ml) | | | 75 | | | | 75 | | | | | | | | | | |
| | Natural cellulose fiber (freeness: 550 ml) | | | | | | | | | | | | | 75 | | | | |
| | Organic solvent-based cellulose fiber (freeness: 50 ml) | | | | | | | | | | | | | | 100 | 100 | 100 | |
| | Organic solvent-based cellulose fiber (freeness: 250 ml) | | | | | | | | | | | | | | | | | 100 |

| | | Examples | | | | | | | | | | | Comparative Examples | | | | | |
|---|---|---|---|---|---|---|---|---|---|---|---|---|---|---|---|---|---|---|
| | | 1 | 2 | 3 | 4 | 5 | G | 7 | 8 | 9. | 10 | 11 | 1 | 2 | 3 | 4 | 5 | 6 |
| Synthetic fiber (% by mass) | Polyvinyl alcohol fiber | 20 | 20 | 20 | 20 | 20 | 20 | 20 | | 55 | 5 | 20 | 20 | 20 | | | | |
| | Polyester fiber | | | | | | | | 20 | | | | | | | | | |
| Binder (% by mass) | Polyvinyl alcohol fiber | 5 | 5 | 5 | 2.5 | 0.5 | 5 | 5 | 5 | 5 | 5 | 5 | 5 | 5 | | | | |
| Fiber diameter of beaten cellulose fiber | Fiber diameter ($\mu$m) at maximum frequency peak | 18 | 18 | 18 | 18 | 18 | 18 | 18 | 18 | 18 | 18 | 18 | 14 | 20 | 22 | 22 | 22 | 24 |
| | Ratio (%) of fibers having fiber diameter of 20 $\mu$m or less | 68.1 | 67.8 | 67.1 | 67.8 | 67.8 | 67.8 | 67.1 | 68.1 | 68.1 | 68.1 | 68.1 | 81.5 | 62.3 | 52.5 | 52.5 | 52.5 | 51.6 |
| | Ratio (%) of fibers having fiber diameter of 30 $\mu$m or less | 96.3 | 96.1 | 96.0 | 96.1 | 96.1 | 96.1 | 96.0 | 96.3 | 96.3 | 96.3 | 96.3 | 98.1 | 92.1 | 94.8 | 94.8 | 94.8 | 93.9 |
| | Ratio (%) of fibers having fiber diameter of more than 30 $\mu$m | 3.7 | 3.9 | 4.0 | 3.9 | 3.9 | 3.9 | 4.0 | 3.7 | 3.7 | 3.7 | 3.7 | 1.9 | 7.9 | 5.2 | 5.2 | 5.2 | 6.1 |
| | Number average fiber diameter ($\mu$m) (after beating) | 16.6 | 17.7 | 18.5 | 17.7 | 17.7 | 17.7 | 18.5 | 16.6 | 16.6 | 16.6 | 16.6 | 14.1 | 20.3 | 19.9 | 19.9 | 19.9 | 19.8 |
| | Maximum fiber diameter ($\mu$m) (after beating) | 59.6 | 59.8 | 66.2 | 60.3 | 60.3 | 60.3 | 66.2 | 59.6 | 59.6 | 59.6 | 59.6 | 57.5 | 69.6 | 36.8 | 36.8 | 36.8 | 36.8 |

EP 4 084 027 A1

14

(continued)

| | | Examples | | | | | | | | | | | Comparative Examples | | | | | |
|---|---|---|---|---|---|---|---|---|---|---|---|---|---|---|---|---|---|---|
| | | 1 | 2 | 3 | 4 | 5 | G | 7 | 8 | 9. | 10 | 11 | 1 | 2 | 3 | 4 | 5 | 6 |
| Physical properties of separator | Basis weight (g/m$^2$) | 20 | 20 | 20 | 20 | 20 | 18 | 18 | 20 | 20 | 20 | 15 | 20 | 20 | 20 | 17 | 15 | 20 |
| | Thickness ($\mu$m) | 48 | 50 | 52 | 51 | 52 | 45 | 46 | 50 | 53 | 46 | 42 | 41 | 55 | 55 | 50 | 45 | 59 |
| | Strength (kg/15 mm) | 0.72 | 0.73 | 0.74 | 0.61 | 0.41 | 0.53 | 0.55 | 0.54 | 1.21 | 0.38 | 0.48 | 0.52 | 0.79 | 0.50 | 0.29 | 0.17 | 0.57 |
| | Air permeability (cc/cm$^2$/sec) | 7.5 | 8.0 | 10.0 | 8.6 | 12.3 | 12.5 | 16.4 | 11.1 | 9.5 | 6.8 | 14.8 | 5.1 | 23.2 | 2.5 | 4.8 | 7.1 | 6.5 |
| | Resistance value ($\Omega$) | 2.5 | 2.4 | 2.2 | 2.2 | 2.0 | 2.3 | 2.0 | 2.8 | 3.0 | 2.3 | 1.9 | 3.3 | 2.5 | 3.4 | 2.9 | 2.9 | 2.4 |

As shown in Table 1, it was confirmed that the separators obtained in Examples 1 to 11 had high strength even though they were thin. Furthermore, the separators obtained in Examples 1 to 11 showed low resistance values. In contrast, in Comparative Examples 2 to 6, thin separators having high strength were not obtained. Furthermore, the separators obtained in Comparative Examples 1 and 3 had high resistance values, and were not suitable as separators for electrochemical elements. In addition, the separator obtained in Comparative Example 2 had high air permeability and was insufficient in shielding property.

**Claims**

1.  A separator for electrochemical elements, the separator comprising synthetic fibers and beaten cellulose fibers, wherein

    the beaten cellulose fibers have a Canadian standard freeness measured in accordance with JIS P 8121 of 50 ml or more and 500 ml or less, and
    in a fiber diameter distribution histogram of the beaten cellulose fibers,

    > (1) the fibers have a maximum frequency peak in a range of 50 μm or less, and
    > (2) a ratio of the fibers having a fiber diameter of 20 μm or less is 55% or more.

2.  The separator for electrochemical elements according to claim 1, further comprising a binder.

3.  The separator for electrochemical elements according to claim 1 or 2, wherein in the fiber diameter distribution histogram of the beaten cellulose fibers, a ratio of the fibers having a fiber diameter of more than 30 μm is 10% or less.

4.  The separator for electrochemical elements according to any one of claims 1 to 3, wherein the synthetic fibers are polyvinyl alcohol-based fibers and/or polyester-based fibers.

5.  The separator for electrochemical elements according to any one of claims 1 to 4, wherein the beaten cellulose fibers are beaten natural cellulose fibers.

6.  The separator for electrochemical elements according to any one of claims 2 to 5, wherein the binder is a polyvinyl alcohol-based binder.

7.  The separator for electrochemical elements according to any one of claims 1 to 6, wherein a content of the synthetic fibers is 1% by mass or more and 55% by mass or less based on a total mass of the separator.

8.  The separator for electrochemical elements according to any one of claims 1 to 7, wherein a content of the beaten cellulose fibers is 30% by mass or more and 95% by mass or less based on a total mass of the separator.

9.  The separator for electrochemical elements according to any one of claims 2 to 8, wherein a content of the binder is 0.5% by mass or more and 20% by mass or less based on a total mass of the separator.

10. The separator for electrochemical elements according to any one of claims 1 to 9, wherein the separator has a thickness of 10 μm or more and less than 70 μm.

11. An electrochemical element comprising the separator for electrochemical elements according to any one of claims 1 to 10.

Fig. 1

Natural cellulose fiber (freeness: 25 ml)

Fig. 2

Natural cellulose fiber (freeness: 150 ml)

Fig. 3

Natural cellulose fiber (freeness: 250 ml)

Fig. 4

Natural cellulose fiber (freeness: 350 ml)

Fig. 5

Natural cellulose fiber (freeness: 550 ml)

Fig. 6

Organic solvent-based cellulose fiber (freeness: 50 ml)

Fig. 7

Organic solvent-based cellulose fiber (freeness: 250 ml)

International application No.

PCT/JP2020/042646

**INTERNATIONAL SEARCH REPORT**

| A. CLASSIFICATION OF SUBJECT MATTER |
|---|
| Int. Cl. H01G11/52(2013.01)i, H01M50/409(2021.01)i, H01G9/02(2006.01)i<br>FI: H01G11/52, H01M2/16 P, H01M2/16 N, H01G9/02 |

According to International Patent Classification (IPC) or to both national classification and IPC

| B. FIELDS SEARCHED |
|---|
| Minimum documentation searched (classification system followed by classification symbols)<br>Int. Cl. H01G11/52, H01M50/409, H01G9/02 |

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 2012-54228 A (NIPPON KODOSHI CORP.) 15 March 2012, paragraphs [0010], [0071], [0085], [0087], [0099], [0111], paragraphs [0010], [0071], [0085], [0087], [0099], [0111] | 1-11<br>1-11 |
| X<br><br>Y | JP 2015-162281 A (MITSUBISHI PAPER MILLS LTD.) 07 September 2015, paragraphs [0035], [0049], [0063], paragraphs [0035], [0049], [0063] | 1, 3-4, 7-8, 10-11<br><br>1-11 |
| Y | JP 2011-26760 A (DAICEL CHEMICAL INDUSTRIES, LTD.) 10 February 2011, paragraphs [0069], [0070], [0079] | 1-11 |

☐ Further documents are listed in the continuation of Box C.        ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>04.01.2021 | Date of mailing of the international search report<br>19.01.2021 |
|---|---|
| Name and mailing address of the ISA/<br>  Japan Patent Office<br>  3-4-3, Kasumigaseki, Chiyoda-ku,<br>  Tokyo 100-8915, Japan | Authorized officer<br><br><br>Telephone No. |

Form PCT/ISA/210 (second sheet) (January 2015)

INTERNATIONAL SEARCH REPORT

Information on patent family members

International application No.

PCT/JP2020/042646

| Patent Documents referred to in the Report | Publication Date | Patent Family | Publication Date |
|---|---|---|---|
| JP 2012-54228 A | 15.03.2012 | US 2013/0149614 A1 paragraphs [0014], [0070], [0084], [0085], [0096], [0107] EP 2602844 A1 CN 103081169 A | |
| JP 2015-162281 A | 07.09.2015 | (Family: none) | |
| JP 2011-26760 A | 10.02.2011 | (Family: none) | |

Form PCT/ISA/210 (patent family annex) (January 2015)

**EP 4 084 027 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019234225 A
- JP 2012222266 A